# EUROPÄISCHE PATENTANMELDUNG

(11) **EP 1 722 196 A1**
(43) Veröffentlichungstag der Anmeldung: **15.11.2006**
(21) Anmeldenummer: 06113105.8
(22) Anmeldetag: 26.04.2006
(51) Int. Cl.: G01C 21/34

(54) **Verfahren zur Berechnung einer Route in einem Navigationssystem**

(30) Priorität: 09.05.2005 DE 102005021271
(71) Anmelder: SIEMENS AKTIENGESELLSCHAFT, 80333 München (DE)
(72) Erfinder: Lichtinger, Michael, 93059, Regensburg (DE); Loibl, Christian, 93055, Regensburg (DE); Salomon, Melanie, 4040 Linz (AT)

(57) **Zusammenfassung**

Die Erfindung betrifft ein Verfahren zur Berechnung oder Neuberechnung einer Route anhand digitaler Straßenkartendaten in einem Navigationssystem eines Kraftfahrzeuges, wobei ein aktueller Standort (3) des Kraftfahrzeuges bekannt ist. Um zu Beginn einer Fahrt bzw. nach Verlassen einer geplanten Route schnell Fahrinformationen an den Fahrzeugführer ausgeben zu können, wird vorgeschlagen, die Berechnung oder Neuberechnung der Route vorausschauend nach Wahrscheinlichkeitsgesichtspunkten zu starten. Dies kann zu Beginn einer Fahrt bereits vor Eingabe des Zielortes durch eine ungerichtete Routenberechnung (S3) erfolgen, an die sich nach Bekanntwerden des Zielortes (Z) eine gerichtete Routenberechnung anschließt.

## Beschreibung

Die Erfindung betrifft ein Verfahren zur Berechnung oder Neuberechnung einer Route anhand digitaler Straßenkartendaten in einem Navigationssystem eines Kraftfahrzeuges, wobei ein aktueller Standort des Kraftfahrzeuges bekannt ist.

In Kraftfahrzeugnavigationssystemen wird eine Routenberechnung anhand von digitalen Straßenkartendaten, der aktuellen Fahrzeugposition als Startort und einem Zielort durchgeführt. Die Straßenkartendaten bestehen aus Straßenabschnitten, die auch als Kanten bezeichnet werden, und verschiedenen Arten von Straßenverzweigungen, die auch als Knoten bezeichnet werden. Mit einem Algorithmus, beispielsweise des Typs Dijkstra, wird bei gegebenen Kriterien, wie beispielsweise "schnelle Route" oder "kurze Route", eine optimale Route anhand so genannter Kosten, wie beispielsweise Fahrzeit oder Wegstrecke, ermittelt.

Die Routenberechnung wird dabei nach Eingabe des Zielortes gestartet und benötigt eine gewisse Zeit. Erst nach Abschluss der Routenberechnung wird ein erster Fahrhinweis ausgegeben. Gerade bei Berechnung einer längeren Route wird die hierfür benötigte Zeit teilweise als nachteilig angesehen. Um nun die Zeit bis zur Ausgabe des ersten Fahrhinweises zu verkürzen, kann die Routenberechnung in zwei Schritten ausgeführt werden. In einem ersten Schritt wird dabei nur ein Teil der Route berechnet, wobei hierfür insbesondere ein Zwischenziel festgelegt wird. Nach Berechnung der Teilroute vom Startort zu dem Zwischenziel kann dann relativ schnell der erste Fahrhinweis ausgegeben werden. Anschließend wird die endgültige Route im zweiten Schritt im Hintergrund berechnet. Ein derartiges Verfahren ist beispielsweise aus der EP 0 983 485 B1 bekannt.

Nachteilig ist hierbei, dass die berechnete erste Teilroute nicht in allen Fällen optimal ist, da die geeignetste Route zwischen Startort und Zielort nur durch die Berechnung der kompletten Route gefunden werden kann. Je näher das Zwischenziel sich am Startort befindet, d. h. je kürzer die Teilroute ist, desto höher ist die Wahrscheinlichkeit, dass der Fahrer des Kraftfahrzeuges nicht auf dem optimalen Weg geführt wird.

Eine andere Möglichkeit zur schnellen Ausgabe eines ersten Fahrhinweises besteht in der Verwendung von bereits vordefinierten, d. h. vorausberechneten Routenabschnitten, die in dem Navigationssystem abgespeichert sind. Hierbei wird das Datenmaterial der Landkartendaten in einzelne Gebiete aufgeteilt, und an den Gebietsgrenzen werden beispielsweise Randknoten in die Kanten eingefügt. Zwischen den Randknoten eines Gebietes werden dann Routen berechnet und abgespeichert. Um die Datenmenge hierbei zu beschränken, wird üblicherweise nur das Autobahnnetz betrachtet. Zum Berechnen einer vollständigen Route müssen dann lediglich die vorberechneten Routenabschnitte zusammengefügt und am Routenanfang und am Routenende Verbindungen zwischen dem Start- bzw. Zielort und jeweils einem Randknoten des jeweiligen Gebietes bestimmt werden. Nachteilig ist bei diesem Verfahren der sehr große Speicherbedarf zum Abspeichern der vordefinierten Routen.

Ein weiteres Problem tritt dann auf, wenn der Fahrer eine berechnete Route verlässt. Auch in diesem Falle ist eine schnelle Ausgabe eines neuen Fahrhinweises erwünscht, und es treten prinzipiell dieselben Probleme wie bei der Erstberechnung einer Route auf.

Aufgabe der Erfindung ist es, ein Verfahren zur Berechnung oder Neuberechnung einer Route in einem Kraftfahrzeugnavigationssystem anzugeben, das die genannten Nachteile vermeidet und schnell einen ersten Fahrhinweis ausgibt, wobei sich der erste Fahrhinweis entweder auf den Beginn einer Route oder auf einen Zeitpunkt nach dem Verlassen einer berechneten Route bezieht.

Erfindungsgemäß wird die Aufgabe bei einem gattungsgemäßen Verfahren dadurch gelöst, dass die Berechnung oder Neuberechnung der Route vorausschauend nach Wahrscheinlichkeitsgesichtspunkten gestartet wird.

Mit dem erfindungsgemäßen Verfahren wird somit die Routenberechnung nicht erst dann gestartet, wenn eine konkrete Routenanfrage vorliegt, sondern bereits dann, wenn mit einer gewissen Wahrscheinlichkeit in Kürze eine Routenanfrage zu erwarten ist. Zum Zeitpunkt des Starts der Routenberechnung liegen dann noch nicht alle für die Routenberechnung erforderlichen Informationen vor. Dennoch kann, wie nachfolgend gezeigt wird, schon frühzeitig mit einer Routenberechnung begonnen werden, so dass der erste Fahrhinweis nach Anforderung der Routenberechnung schneller ausgegeben werden kann. Das erfindungsgemäße Verfahren beruht somit auf einer präventiven Strategie zum Start der Routenberechnung.

In einer ersten Ausgestaltung dieses Verfahrens ist vorgesehen, dass die Routenberechnung nach Eintritt eines Startereignisses als ungerichtete Routenberechnung ausgehend vom aktuellen Standort ohne Kenntnis eines Zielortes zur Berechnung mehrerer Routen gestartet wird. Hierbei wird situationsbezogen bestimmt, ob eine Anfrage zur Routenberechnung in Kürze zu erwarten ist. Ausgangspunkt kann hierbei beispielsweise die Betätigung eines Bedienelementes sein, mit dem ein Navigationssystem eingeschaltet wird. Als Beispiel einer Eingabe, die auf eine bevorstehende Routenberechnung schließen lässt, kann ferner das Aufrufen eines Menüpunktes zur Zieleingabe in ein Navigationssystem gewertet werden. Das Navigationssystem startet dann bereits nach einem solchen Ereignis eine ungerichtete Routenberechnung ausgehend vom aktuellen Standort des Kraftfahrzeuges, ohne Kenntnis über den Zielort. Hierbei wird eine Arbeitsstruktur aufgebaut, in der in Bezug auf die Fahrzeugposition alle schon betrachteten Pfade mit ihren Kosten und der zugehörige Weg, d.h. eine Liste von Knoten und/oder Kanten, gespeichert sind.

Eine derartige ungerichtete Routenberechnung kann insbesondere mit einem Algorithmus durchgeführt werden, der eine nachträgliche Betrachtung des evtl. bereits gefundenen Zielpfads und die Parametrisierung des nachfolgenden Algorithmus für die gerichtete Suche erlaubt. Vorteilhafterweise kann die ungerichtete Routenberechnung daher mit einem an sich bekannten Algorithmus vom Typ Dijkstra durchgeführt werden.

Vorteilhafterweise werden nach Stellung einer Routenanfrage zu einem Zielort die Ergebnisse der ungerichteten Routenberechnung auf ihre Relevanz für die Routenanfrage geprüft und so weit relevant in die Routenberechnung einbezogen. Sobald also von dem Benutzer der Zielort eingegeben wurde, wird die ungerichtete Routenberechnung abgebrochen, und es wird eine Routenberechnung zu dem nunmehr bekannten Zielort gestartet, bei der die Ergebnisse der ungerichteten Routenberechnungen, soweit möglich, berücksichtigt werden. Nach Stellung der Routenanfrage wird somit eine gerichtete Routenberechnung gestartet. Die gerichtete Routenberechnung kann insbesondere mit einem an sich bekannten Algorithmus des Typs A* durchgeführt werden. Beim Übergang von der ungerichteten Suche mit dem Dijkstra-Algorithmus zu der gerichteten Suche mit dem A*-Algorithmus können die Kosten der Wege in der Arbeitsstruktur mit der Bewertungsfunktion der zielgerichteten Suche bewertet werden. Wurde das Ziel bereits betrachtet, so ist bei Verwendung des Dijkstra-Algorithmus der optimale Zielpfad bereits gefunden. Bei Verwendung eines anderen Algorithmus für die ungerichtete Suche ist dagegen i.a. eine Bewertung erforderlich. Nach dem Umbau der Arbeitsstruktur wird mit der zielgerichteten Suche, basierend auf den Daten der Arbeitsstruktur, begonnen.

In einer vorteilhaften Ausführungsform wird während der ungerichteten Routenberechnung eine Veränderung des aktuellen Standortes gegenüber dem Beginn der ungerichteten Routenberechnung bestimmt und bei Überschreitung eines Vorgabewertes für die Veränderung des Standortes die ungerichtete Routenberechnung neu gestartet. Hierbei wird also berücksichtig, ob sich das Fahrzeug bereits bewegt. So kann es durchaus vorkommen, dass während der Fahrt von einem Beifahrer das Navigationssystem bedient wird. Das Fahrzeug kann sich hierbei bereits mit hoher Geschwindigkeit bewegen. Eine solch schnelle Veränderung des Standortes des Fahrzeuges kann daher einen Neustart der ungerichteten Routenberechnung erforderlich machen. Hierbei kann insbesondere die aktuell zurückgelegte Fahrstrecke seit dem Beginn der ungerichteten Routenberechnung berücksichtigt werden, und es können bestimmte Änderungen als nicht relevant eingestuft werden. Nicht relevante Änderungen können zum Beispiel eine Bewegung im Straßennetz sein, bei der die Kante des Graphen nicht gewechselt wird, oder ein Überfahren eines Knotens mit lediglich zwei Kanten. Jedoch können auch komplexere Knoten mit mehr als zwei Kanten unter Umständen als nicht relevant betrachtet werden, beispielsweise dann, wenn die Kanten Einfahrten zu Halbinseln im Graphen darstellen, die keine Relevanz für den Zielpfad haben.

In einer Weiterbildung des Verfahrens ist vorgesehen, dass nach Stellung der Routenanfrage eine der mit der ungerichteten Routenberechnung berechnenden Routen als erste Teilroute der Route zum Zielort ausgegeben wird. Hierbei wird also nach Bekanntwerden des Zielortes eine Bewertung der unterschiedlichen bisher betrachteten Pfade durchgeführt und der wahrscheinlichste Zielpfad als Teilroute präsentiert. Diese Vorgehensweise liefert insbesondere dann ein akzeptables Ergebnis, wenn der Zielort weit vom Startort entfernt ist. In dieses Fall reduziert sich der Beginn einer Route zumeist auf den Weg zur nächstgelegenen Autobahnauffahrt. Die verbleibenden Restrouten von der Autobahnauffahrt zu verschiedenen Zielorten unterscheiden sich dann im Wesentlichen hinsichtlich der Fahrtrichtung auf der Autobahn zum Zielort hin. Bei dieser Variante des erfindungsgemäßen Verfahrens können für die gerichtete Routenberechnung auch Algorithmen eingesetzt werden, die nicht auf dem Dijkstra-Algorithmus, der für die ungerichtete Routenberechnung verwendet wird, basieren.

In einer zweiten Ausgestaltung des Verfahrens ist vorgesehen, dass bei berechneter Route und Zielführung anhand der berechneten Route das Fahrverhalten bezüglich der berechneten Route beurteilt wird und aus der Überwachung des Fahrverhaltens eine Wahrscheinlichkeit für ein zukünftiges Abweichen von der berechneten Route bestimmt wird. Bei dieser Verfahrensvariante wurde somit bereits eine Route zu dem ebenfalls bereits bekannten Zielort berechnet, und es werden Fahrinformationen an den Fahrzeugführer ausgegeben. Nun besteht jedoch die Gefahr, dass der Fahrzeugführer an einem Knoten die berechnete Route bewusst oder unbewusst verlässt. Auch in diesem Falle ist eine möglichst schnelle Neuberechnung einer Route erforderlich, um schnell weitere Fahrhinweise ausgeben zu können. In dieser Situation wird aus der Überwachung des Fahrverhaltens eine Wahrscheinlichkeit für das Abweichen von der berechneten Route bestimmt. Übersteigt die Wahrscheinlichkeit einen vorgegebenen Grenzwert, so wird vorausschauend eine Routenneuberechnung gestartet. Somit können nach dem tatsächlichen Verlassen der berechneten Route frühzeitig weitere Fahrinformationen ausgegeben werden.

Das Fahrverhalten kann hierbei insbesondere anhand einer befahrenen Fahrspur einer mehrspurigen Straße beurteilt werden. Nähert sich das Fahrzeug auf einer mehrspurigen Straße einem Knoten, an dem beispielsweise ein Abbiegen nach links vorgesehen ist, auf der rechten Fahrspur, so kann dies als Indiz dafür gewertet werden, dass das Fahrzeug nicht der berechneten Route folgen wird.

In gleicher Weise kann auch das Fahrverhalten anhand einer Betätigung einer Fahrrichtungsanzeigevorrichtung beurteil werden. Betätigt in der zuvor geschilderten Situation der Fahrer die rechte Fahrtrichtungsanzeigevorrichtung, so kann davon ausgegangen werden, dass er an dem Knoten nicht wie vorgesehen nach links, sondern nach rechts abbiegen wird. Somit kann in dieser Situation bereits eine Routenneuberechnung gestartet werden, wobei als Startpunkt für die Neuberechnung eine vor dem Kraftfahrzeug außerhalb der berechneten Route liegende Kante verwendet wird, die an den Knoten anschließt, den das Fahrzeug in Kürze erreicht.

Die Erfindung wird nachfolgend anhand eines Ausführungsbeispiels und der Zeichnung näher erläutert. Es zeigen:
- Figur 1: ein Straßennetz mit Knoten und Kanten,
- Figur 2: ein für eine ungerichtete Suche begrenztes Straßennetz,
- Figur 3: ein Straßennetz mit einem Start- und einem Zielort,
- Figur 4: ein Ablaufdiagramm einer ersten Verfahrensvariante,
- Figur 5: eine Straßenkreuzung,
- Figur 6: ein Ablaufdiagramm einer zweiten Verfahrensvariante.

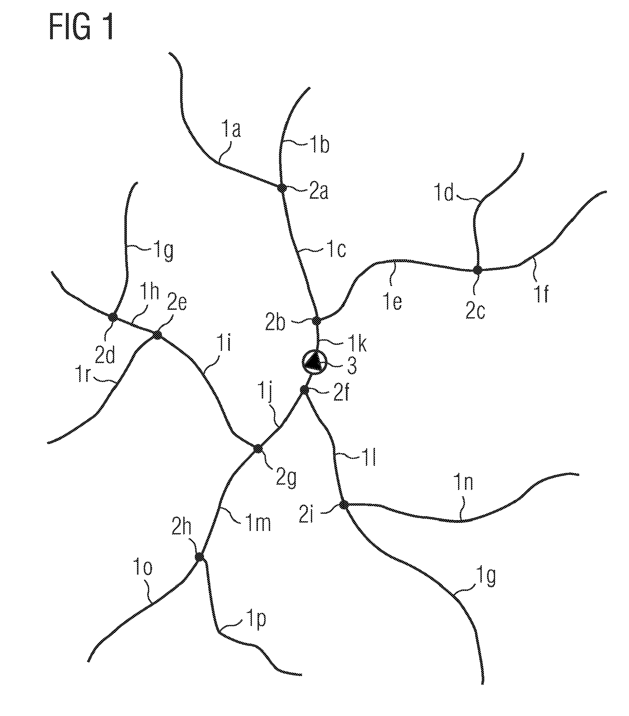

Figur 1 zeigt ein Straßennetz mit einer Vielzahl von Kanten 1 und Knoten 2. Die Kanten 1 repräsentieren Straßenabschnitte, und die Knoten 2 verbinden zwei oder mehr Kanten miteinander. Der aktuelle Standort 3 des Fahrzeuges befindet sich auf der Kante 1k. Wird nun nach Wahrscheinlichkeitsgesichtspunkten festgestellt, dass demnächst eine Routenberechnung vorzunehmen ist, der Zielort jedoch noch nicht bekannt ist, so wird eine ungerichtete Routenberechnung ausgehend vom aktuellen Standort 3 des Fahrzeuges in dem Straßennetz durchgeführt. Hierbei wird beispielsweise eine erste Route beginnend vom Standort 3 über den Knoten 2b die Kante 1c den Knoten 2a und die Kante 1a festgelegt und es werden die Kosten, die ein Maß für die Dauer zum Befahren der Fahrtroute oder für die Streckenlänge sein können, bewertet. In gleicher Weise werden ausgehend vom Standort 3 alle anderen möglichen Routen bewertet. Auf diese Weise wird nach dem bekannten Dijkstra-Algorithmus eine Arbeitsstruktur aufgebaut. In der Arbeitsstruktur werden alle schon betrachteten Pfade sowie der zugehörige Weg, d.h. eine Liste von Knoten und/oder Kanten, abgespeichert. In großen Straßennetzen kann der Aufbau einer derartigen Arbeitsstruktur allerdings sehr aufwendig sein.

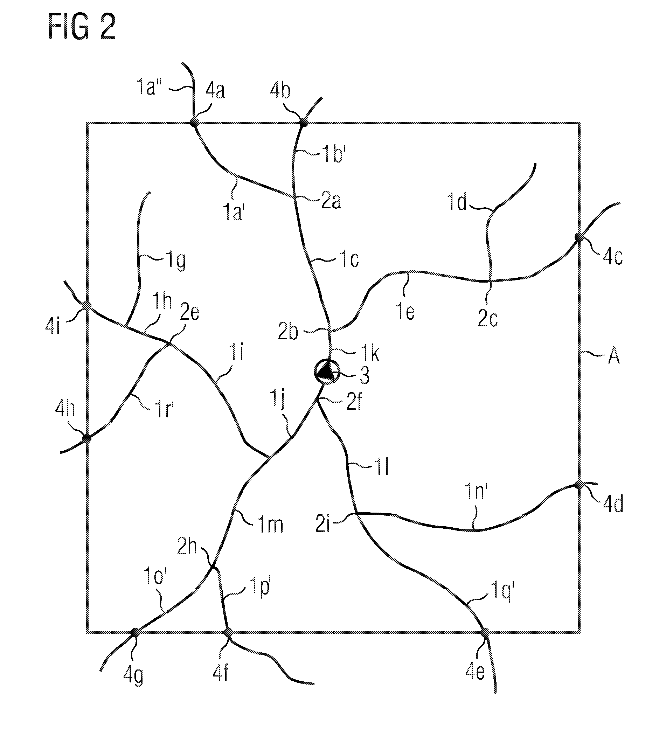

Figur 2 zeigt daher eine Variante, bei der die ungerichtete Suche auf ein festgelegtes Gebiet, das durch das Rechteck A definiert ist, begrenzt wird. Hierbei werden an den Grenzen des Gebiets, an denen Kanten 1 aus dem Rechteck A austreten, neue Knoten als Randknoten 4 festgelegt werden. Weiterhin müssen dann Kanten, die über die Begrenzung hinausgehen, aufgeteilt werden. Beispielsweise wird die Kante 1a in eine Kante 1a' zwischen dem Knoten 2a und dem Randknoten 4a sowie eine weitere Kante 1a " außerhalb des Rechtecks A aufgeteilt. Alternativ kann jedoch auch der erste Knoten, der nicht mehr im Rechteck A liegt als Randknoten ausgewählt werden. Ein Aufteilen der Kanten ist dann nicht erforderlich.

Die ungerichtete Suche wird nun auf den Bereich innerhalb des Rechtecks A begrenzt. Bei dieser ungerichteten Suche werden somit Teilrouten zwischen dem aktuellen Standort 3 des Fahrzeuges und den Randknoten 4 festgelegt und bewertet.

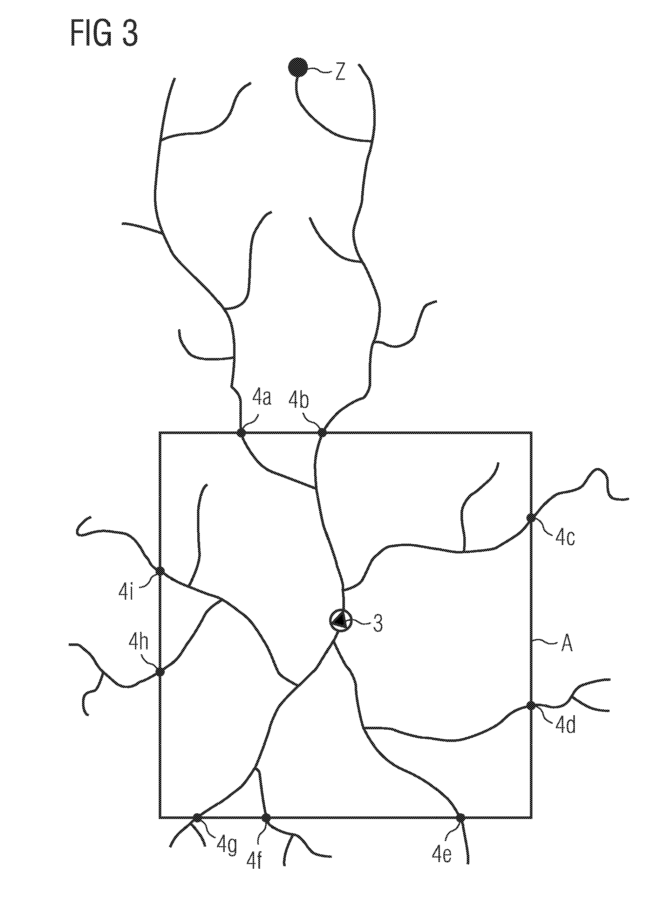

Liegt nun der gewünschte Zielort vor, so wird von der ungerichteten Suche nach dem Dijkstra-Algorithmus auf eine gerichtete Suche mit einem Algorithmus des Typs A* übergegangen. Figur 3 zeigt das entsprechende, nunmehr erweiterte Straßennetz, das neben dem durch das Rechteck A begrenzten Gebiet darüber hinausgehende Kanten und Knoten aufweist.

Hierbei kann sich beispielsweise herausstellen, dass die Teilroute zwischen dem aktuellen Standort 3 und dem Randknoten 4b übernommen werden kann. Es können somit unmittelbar nach Bekanntwerden des Zielortes Z Routenführungshinweise ausgegeben werden, während im Hintergrund eine gerichtete Routenberechnung vom Randknoten 4b zum Zielort Z erfolgt. Liegt noch keine geeignete Teilroute vor, so wird mit der Bewertung der schon bestimmten Routen bzw. der gerichteten Suche begonnen.

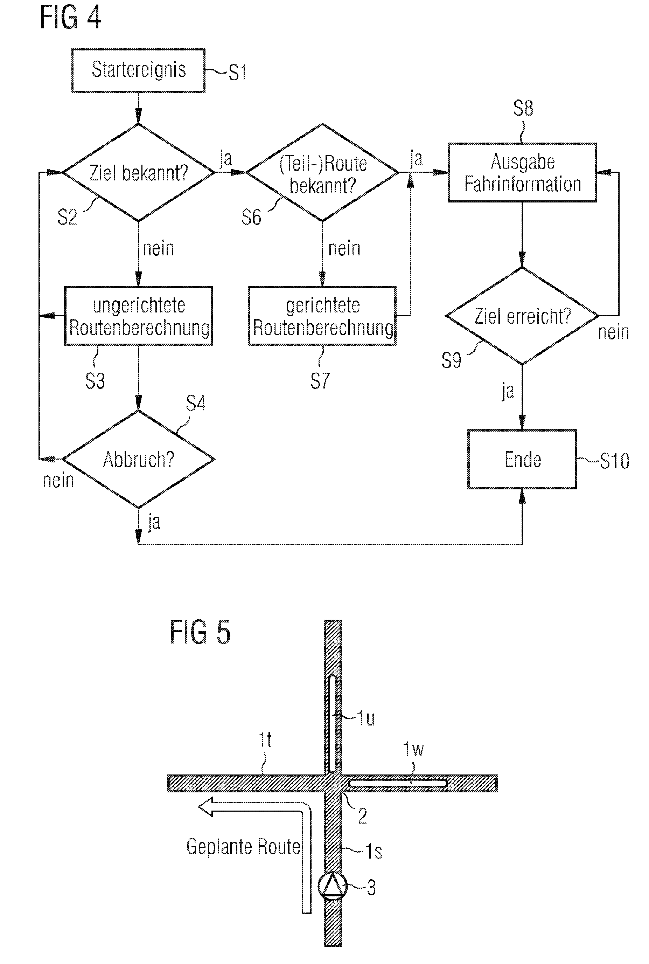

In Figur 4 ist ein Ablaufdiagramm dargestellt, aus dem diese Verfahrensvariante weiter ersichtlich wird. In Schritt S1 wird auf Grund eines Startereignisses die Routenberechnung gestartet. Das Startereignis kann beispielsweise das Berühren eines Bedienelementes sein, mit dem das Navigationssystem eingeschaltet wird. Ein weiteres Beispiel für ein Startereignis ist das Öffnen eines Menüpunktes, aus dem eine Routenberechnung möglich ist.

Nachdem ein derartiges Startereignis registriert wurde, wird in Schritt S2 geprüft, ob der Zielort bereits bekannt ist. Ist der Zielort nicht bekannt, so wird in Schritt S3 eine ungerichtete Routenberechnung ausgehend vom aktuellen Standort des Fahrzeuges nach dem Dijkstra-Algorithmus vorgenommen. Parallel dazu wird ständig abgeprüft, ob der Zielort inzwischen bekannt ist. Sobald der Zielort bekannt ist wird die ungerichtete Suche abgebrochen und mit Schritt S6, der unten näher beschrieben ist, das Verfahren fortgesetzt.

In Schritt S4 wird optional geprüft, ob die ungerichtete Routenberechnung verworfen werden sollte, beispielsweise weil der Benutzer des Systems zwischenzeitlich einen anderen Menüpunkt aufgerufen hat, aus dem eine Routenberechnung nicht möglich ist, oder sich das Fahrzeug inzwischen weit vom Startort entfernt hat. Ist dies der Fall, so wird in Schritt S10 die Routenberechnung abgebrochen oder neu gestartet.

Ist dies in Schritt S4 nicht der Fall, so erfolgt ein Rücksprung in Schritt S2, d. h. es wird erneut geprüft, ob das Ziel zwischenzeitlich bekannt ist. Ist das Ziel nun bekannt, so wird in Schritt S6 geprüft, ob eine Route oder eine Teilroute bereits vorhanden ist. Diese Teilroute wurde insbesondere in Schritte S3 bei der ungerichteten Routenberechnung bestimmt. Ist bereits eine vollständige Route zum Zielort bekannt, so wird in Schritt S7 die Ausgabe von Routeninformationen, das heißt die Zielführung, gestartet. Ist in Schritt S6 nur eine Teilroute durch die ungerichtete Routenberechnung in Schritt S3 bekannt, so wird, gegebenenfalls nach erneuter vorheriger Bewertung der Teilrouten mit den Kriterien der gerichteten Routensuche, eine geeignete Teilroute ausgewählt und ebenfalls mit der Ausgabe von ersten Routeninformationen in Schritt S8 begonnen.

Parallel dazu erfolgt in Schritt S7 eine gerichtete Routenberechnung der Route zum Zielort. Die gerichtete Routenberechnung erfolgt nach einem Algorithmus des Typs A*.

Die Ergebnisse der gerichteten Routenberechnung münden schließlich ebenfalls im Schritt S8 in die Ausgabe von entsprechenden Routeninformationen. Die Routeninformationen werden solange ausgegeben, bis in Schritt S9 festgestellt wird, dass das Ziel erreicht ist. Anschließend wird das Verfahren in Schritt S10 beendet.

Bei dieser Verfahrensvariante wird die Routenberechnung somit bereits gestartet, wenn der Zielort noch nicht bekannt ist. Die Verfahrensvariante kann daher zu Beginn einer Fahrt zur Beschleunigung der Ausgabe von ersten Zielführungsinformationen angewendet werden.

Das Starten einer Routenberechnung vorausschauend nach Wahrscheinlichkeitsgesichtspunkten kann jedoch auch noch in einer anderen Situation vorteilhaft angewendet werden. In dieser Situation wird davon ausgegangen, dass bereits eine Routenberechnung durchgeführt wurde und Fahrhinweise an den Fahrer ausgegeben werden. Hierbei kann jedoch die Situation auftreten, dass der Fahrer an einem Knoten ein vorgegebenes Abbiegemanöver nicht vornimmt, sondern einem anderen Straßenabschnitt, d. h. einer anderen Kante, folgt. Auch in diesem Fall ist eine schnelle Neuberechnung einer Route erforderlich.

Diese Situation ist in Figur 5 dargestellt. Das Fahrzeug befindet sich am aktuellen Standort 3 unmittelbar vor einem Knoten 2, der mit den Kanten 1s, 1t, 1u und 1w verbunden ist. Das Fahrzeug befindet sich auf der Kante 1s und soll nach der geplanten Route auf die Kante 1t abbiegen. Es wird nun jedoch festgestellt, dass mit einer gewissen Wahrscheinlichkeit der Fahrzeugführer nicht der geplanten Route folgen wird, sondern entweder auf der Kante 1u oder der Kante 1w weiterfahren wird. Die Wahrscheinlichkeit für das Nichtbefolgen der geplanten Route kann beispielsweise daraus abgeleitet werden, dass der Fahrer auf einer mehrspurigen Straße nicht die für das Linksabbiegen vorgesehene linke Fahrspur, sondern eine rechte Fahrspur befährt. Ein anderes Indiz für das voraussichtliche Nichtbefolgen der geplanten Route ist das Betätigen einer Fahrtrichtungsanzeigevorrichtung für einen Rechtsabbiegevorgang.

Wird ein solches Nichtbefolgen der geplanten Route nun mit hinreichender Wahrscheinlichkeit detektiert, so kann bereits vor Erreichen des Knotens 2 bzw. der Kanten 1u oder 1w eine Neuberechnung der Route mit der Kante 1u bzw. 1w als Startpunkt (Startkante) durchgeführt werden. Dem Fahrer kann dann bereits kurz nach dem Verlassen der geplanten Route eine neue Route mit entsprechenden Fahrhinweisen präsentiert werden.

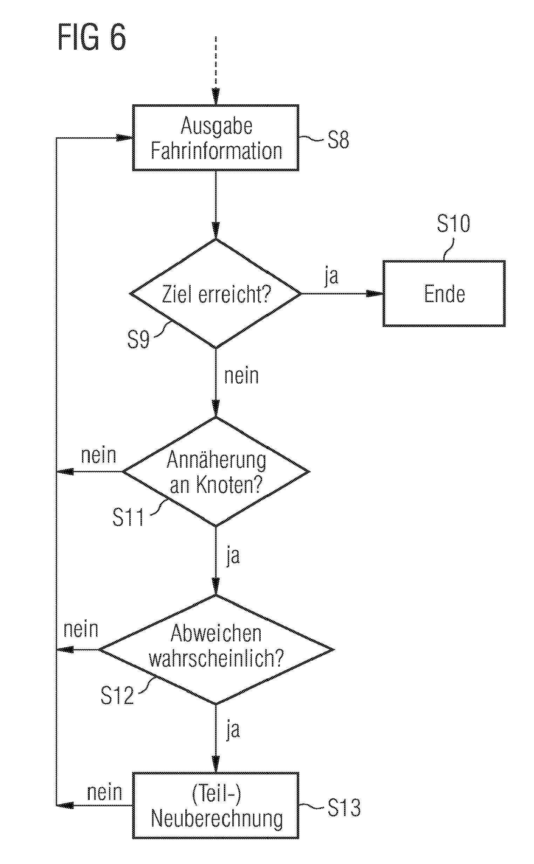

Anhand von Figur 6 wird diese Verfahrensvariante näher erläutert. Die Verfahrensvariante startet in Schritt S8 mit der Ausgabe von Routeninformationen zu der geplanten Fahrtroute. In Schritt S9 wird wie bei der zuvor beschriebenen Verfahrensvariante geprüft, ob das Ziel erreicht wurde. Ist dies der Fall, so endet das Verfahren in Schritt S10. Wird in Schritt S9 festgestellt, dass das Ziel noch nicht erreicht ist, so wird in Schritt S11 geprüft, ob sich das Fahrzeug einem Knoten nähert. Ist dies nicht der Fall, so wird das Verfahren in Schritt S8 mit der Ausgabe von Routeninformationen fortgesetzt. Wird in Schritt S11 dagegen detektiert, dass sich das Fahrzeug einem Knoten nähert, so wird in Schritt S12 geprüft, ob eine Abweichung von der geplanten Route mit einer gewissen Wahrscheinlichkeit bevorsteht. Ist dies nicht der Fall, weil der Knoten beispielsweise nur zwei Kanten aufweist, wie es bei den Randkanten 4 der Fall ist, so wird das Verfahren mit Schritt S8 fortgesetzt.

Wird dagegen in Schritt S12 festgestellt, dass ein Abweichen von der geplanten Route wahrscheinlich ist, so wird in Schritt S13 eine Routenneuberechnung oder eine Teilneuberechnung der Route mit mindestens einer der Kanten 1u oder 1w als Startkante gestartet. Hat der Fahrer beispielsweise die Fahrtrichtungsanzeigevorrichtung für ein Rechtsabbiegen betätigt, so kann dies ein Indiz für ein bevorstehendes Abbiegen nach rechts am Knoten 2 auf die Kante 1w sein, so dass die Neuberechnung der Route vorzugsweise mit der Kante 1w als neue Startkante durchgeführt wird.

Liegen keine Hinweise vor, in welche Richtung der Fahrer von der geplanten Route abweichen wird, so muss eine der Startkanten 1u oder 1w für eine erste Neuberechung der Route ausgewählt werden. Verbleibt ausreichend Zeit, bis das Fahrzeug den Knoten 2 überschreitet, beispielsweise weil eine Lichtzeichenanlage auf "rot" geschaltet ist, so kann auch sowohl beginnend mit der Kante 1u als auch mit der Kante 1w eine neue Routenberechnung durchgeführt werden. Nach der Neuberechnung der Route in Schritt S13 und Verlassen der ursprünglich geplanten Route werden in Schritt S8 Fahrhinweise zu der neu berechneten Route ausgegeben.

Mit dem erfindungsgemäßen vorausschauenden Berechnen einer Route nach Wahrscheinlichkeitsgesichtspunkten können somit Fahrhinweise sowohl zu Beginn einer Fahrt als auch beim Verlassen der geplanten Route deutlich schneller ausgegeben werden als mit den bekannten Verfahren.

## Patentansprüche

1. Verfahren zur Berechnung oder Neuberechnung einer Route anhand digitaler Straßenkartendaten in einem Navigationssystem eines Kraftfahrzeugs, wobei ein aktueller Standort (3) des Kraftfahrzeugs bekannt ist, **dadurch gekennzeichnet, dass** die Berechnung oder Neuberechnung der Route vorausschauend nach Wahrscheinlichkeitsgesichtspunkten gestartet wird.

2. Verfahren nach Anspruch 1, **dadurch gekennzeichnet, dass** die Routenberechnung nach Eintritt eines Startereignisses als ungerichtete Routenberechnung ausgehend vom aktuellen Standort (3) ohne Kenntnis eines Zielorts (Z) zur Berechnung mehrerer Routen gestartet wird.

3. Verfahren nach Anspruch 1 oder 2, **dadurch gekennzeichnet, dass** die ungerichtete Routenberechnung mit einem Algorithmus vom Typ Dijkstra durchgeführt wird.

4. Verfahren nach Anspruch 2 oder 3, **dadurch gekennzeichnet, dass** nach Stellung einer Routenanfrage zu einem Zielort (Z) die Ergebnisse der ungerichteten Routenberechnung auf ihre Relevanz für die Routenanfrage geprüft werden und soweit relevant in die Routenberechnung einbezogen werden.

5. Verfahren nach einem der vorhergehenden Ansprüche, **dadurch gekennzeichnet, dass** nach Stellung der Routenanfrage eine gerichtete Routenberechnung gestartet wird.

6. Verfahren nach Anspruch 5, **dadurch gekennzeichnet, dass** die gerichtete Routenberechnung mit einem Algorithmus des Typs A* durchgeführt wird.

7. Verfahren nach einem der vorhergehenden Ansprüche 2 bis 6, **dadurch gekennzeichnet, dass** während der ungerichteten Routenberechnung eine Veränderung des aktuellen Standort (3) gegenüber dem Beginn der ungerichteten Routenberechnung bestimmt wird und bei Überschreitung eines Vorgabewerts für die Veränderung des Standorts die ungerichtete Routenberechnung neu gestartet wird.

8. Verfahren nach einem der vorhergehenden Ansprüche 4 bis 7, **dadurch gekennzeichnet, dass** nach Stellung der Routenanfrage eine der mit der ungerichteten Routenberechnung berechneten Routen als erste Teilroute der Route zum Zielort ausgegeben wird.

9. Verfahren nach Anspruch 1, **dadurch gekennzeichnet, dass** bei berechneter Route und Zielführung anhand einer berechneten Route das Fahrverhalten bezüglich der berechneten Route beurteilt wird und aus der Überwachung des Fahrverhaltens eine Wahrscheinlichkeit für ein zukünftiges Abweichen von der berechneten Route bestimmt wird.

10. Verfahren nach Anspruch 9, **dadurch gekennzeichnet, dass** das Fahrverhalten anhand einer befahrenen Fahrspur einer mehrspurigen Straße beurteilt wird.

11. Verfahren nach Anspruch 9, **dadurch gekennzeichnet, dass** das Fahrverhalten anhand einer Betätigung einer Fahrtrichtungsanzeigevorrichtung beurteilt wird.

12. Verfahren nach einem der Ansprüche 9 bis 11, **dadurch gekennzeichnet, dass** eine Routenneuberechnung durchgeführt wird, wenn die Wahrscheinlichkeit für ein zukünftiges Abweichen von der berechneten Route einen Vorgabewert übersteigt, wobei als Startpunkt für die Neuberechnung eine vor der aktuellen Position (3) des Kraftfahrzeugs außerhalb der berechneten Route liegende Kante (1u, 1w) verwendet wird, die an einen Knoten (2) anschließt, den das Kraftfahrzeug als nächsten Knoten erreicht.
